# EUROPEAN PATENT SPECIFICATION

(11) **EP 3 474 399 B1**
(45) Date of publication and mention of the grant of the patent: **05.08.2020**
(21) Application number: 17813057.1
(22) Date of filing: 11.05.2017
(51) Int. Cl.: H02B 3/00, H02B 1/20

(54) **SWITCHBOARD ASSEMBLY APPARATUS AND SWITCHBOARD ASSEMBLY METHOD**
SCHALTTAFELMONTAGEVORRICHTUNG UND SCHALTTAFELMONTAGEVERFAHREN
APPAREIL D'ASSEMBLAGE DE TABLEAU DE CONTRÔLE ET PROCÉDÉ D'ASSEMBLAGE DE TABLEAU DE CONTRÔLE

(30) Priority: 17.06.2016 JP 2016120452
(43) Date of publication of application: 24.04.2019
(73) Proprietor: Mitsubishi Electric Corporation, Chiyoda-ku Tokyo 100-8310 (JP)
(72) Inventor: MATSUKAWA, Akifumi, Tokyo 100-8310 (JP); OGINO, Masato, Tokyo 100-8310 (JP)
(74) Representative: Witte, Weller & Partner Patentanwälte mbB
(86) International application number: PCT/JP2017/017894
(87) International publication number: WO 2017/217152

(56) References cited:
- JP-A- H09 322 322
- JP-A- 2006 246 547
- US-A1- 2010 314 166

## Description

### TECHNICAL FIELD

The present invention relates to a switchboard assembly facility and a switchboard assembly method in which, for example, a plurality of horizontal busbars and a plurality of vertical busbars of a switchboard are assembled.

### BACKGROUND ART

In a conventional switchboard, in order to assemble within assembly tolerance of drawing instructions, it is confirmed whether the assembly is performed within the assembly tolerance of the drawing instructions by means of a measuring tool in the middle of the assembly and after the assembly; and if not assembled within the assembly tolerance, the assembly is performed by adjusting the positions of horizontal busbars and vertical busbars so as to enter within the assembly tolerance.

Furthermore, in Patent Document 1 (JP-A-H10(1998)-313509), assembly is performed using a floor surface as a dimensional reference surface; however, a positioning member that determines the position of each member is not present and, also in this case, it is confirmed whether the assembly is performed within assembly tolerance of drawing instructions by means of a measuring tool in the middle of the assembly and after the assembly; and if not assembled within the assembly tolerance, the assembly is performed by adjusting the position of each member so as to enter within the assembly tolerance.

US 2010/0314166 A1 discloses a bus support system. The bus support system includes a bus support having a plurality of vertical channels configured to receive vertical bus conductors, each of the plurality of vertical channels having a rear protrusion on a rear side of the bus support. The bus support system also includes a plurality of add-on bus support braces disposed on the rear side of the bus support and configured to contact the plurality of channels to limit a movement of the vertical bus conductors during a high current event.

### RELATED ART DOCUMENT

### PATENT DOCUMENT

Patent Document 1: JP-A-H10(1998)-313509

### SUMMARY OF THE INVENTION

### PROBLEMS TO BE SOLVED BY THE INVENTION

In the aforementioned conventional switchboard, a member that determines the position of the horizontal busbars and a member that determines the position of the vertical busbars are not present and in order to assemble the horizontal busbars and the vertical busbars within the assembly tolerance of the drawing instructions, it is confirmed whether the assembly is performed within the assembly tolerance of the drawing instructions by means of the measuring tool in the middle of the assembly and after the assembly; and if not assembled within the assembly tolerance, the assembly is performed by adjusting the positions of the horizontal busbars and the vertical busbars so as to enter within the assembly tolerance. Accordingly, a problem exists in that much time and labor are required for assembling a plurality of horizontal busbars and a plurality of vertical busbars.

Furthermore, the assembly is performed by adjusting the positions of the horizontal busbars and the vertical busbars so as to enter within the tolerance assembly; and accordingly, a problem exists in that it is difficult to say that whoever works, the plurality of horizontal busbars and the plurality of vertical busbars are assembled in stable quality.

The present invention has been made to solve the above described problem, and an object of the present invention is to provide a switchboard assembly facility and a switchboard assembly method, in which assembly can be performed by simple work and in stable quality.

### MEANS FOR SOLVING THE PROBLEMS

According to the present invention, there is provided a switchboard assembly facility including: a horizontal busbar reference positioning patch plate which is mounted on a surface plate and determines the reference position of each of a plurality of horizontal busbars; a horizontal busbar height positioning plate which is mounted on the surface plate and determines the height position of the horizontal busbar; and a horizontal busbar horizontal direction positioning patch plate which is mounted on the horizontal busbar height positioning plate at a position where a plurality of vertical busbars extend, and determines the horizontal direction position of the horizontal busbar, the facility being further defined according to independent claim 1.

Furthermore, according to the present invention, there is provided a switchboard assembly method including the steps of:
inserting each of a plurality of horizontal busbars, each having a connection block to be connected to each of a plurality of vertical busbars, between horizontal busbar horizontal direction positioning patch plates of a horizontal busbar height positioning plate mounted on a surface plate and bringing the horizontal busbar into contact with a horizontal busbar reference positioning patch plate; and arranging each of the plurality of vertical busbars, each of which is orthogonal to each of the horizontal busbars and is extended, at the position of each of the connection blocks of the horizontal busbars.

### ADVANTAGEOUS EFFECT OF THE INVENTION

According to the switchboard assembly facility and the switchboard assembly method according to present invention, there can be obtained the switchboard assembly facility and the switchboard assembly method, in which the assembly can be performed by simple work and in stable quality.

### BRIEF DESCRIPTION OF THE DRAWINGS

FIG. 1 is a plan view showing a switchboard assembly facility according to Embodiment 1 of the present invention;
FIG. 2 is a front view showing the switchboard assembly facility according to Embodiment 1 of the present invention;
FIG. 3 is a side view showing the switchboard assembly facility according to Embodiment 1 of the present invention;
FIG. 4 is a plan view showing the switchboard assembly facility according to Embodiment 1 of the present invention;
FIG. 5 is a front view showing the switchboard assembly facility according to Embodiment 1 of the present invention;
FIG. 6 is a side view showing the switchboard assembly facility according to Embodiment 1 of the present invention;
FIG. 7 is a plan view showing a vertical busbar positioning jig in the switchboard assembly facility according to Embodiment 1 of the present invention;
FIG. 8 is a side view showing the vertical busbar positioning jig in the switchboard assembly facility according to Embodiment 1 of the present invention;
FIG. 9 is a plan view showing a part of the switchboard assembly facility according to Embodiment 1 of the present invention;
FIG. 10 is a front view showing the part of the switchboard assembly facility according to Embodiment 1 of the present invention;
FIG. 11 is a side view showing the part of the switchboard assembly facility according to Embodiment 1 of the present invention;
FIG. 12 is a plan view showing a horizontal busbar nut in the switchboard assembly facility according to Embodiment 1 of the present invention;
FIG. 13 is a plan view showing a switchboard assembly method according to Embodiment 1 of the present invention;
FIG. 14 is a front view showing the switchboard assembly method according to Embodiment 1 of the present invention;
FIG. 15 is a side view showing the switchboard assembly method according to Embodiment 1 of the present invention;
FIG. 16 is a plan view showing the switchboard assembly method according to Embodiment 1 of the present invention;
FIG. 17 is a front view showing the switchboard assembly method according to Embodiment 1 of the present invention;
FIG. 18 is a side view showing the switchboard assembly method according to Embodiment 1 of the present invention;
FIG. 19 is an enlarged side view showing the switchboard assembly method according to Embodiment 1 of the present invention;
FIG. 20 is an enlarged side view showing the switchboard assembly method according to Embodiment 1 of the present invention;
FIG. 21 is a side view showing the switchboard assembly method according to Embodiment 1 of the present invention; and
FIG. 22 is an enlarged side view showing the switchboard assembly method according to Embodiment 1 of the present invention.

### MODE FOR CARRYING OUT THE INVENTION

### Embodiment 1.

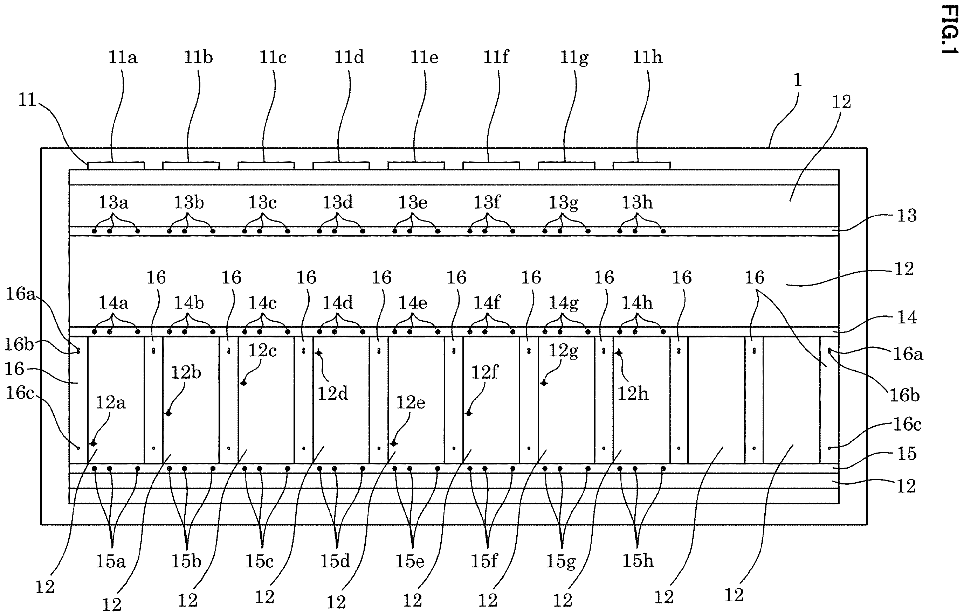

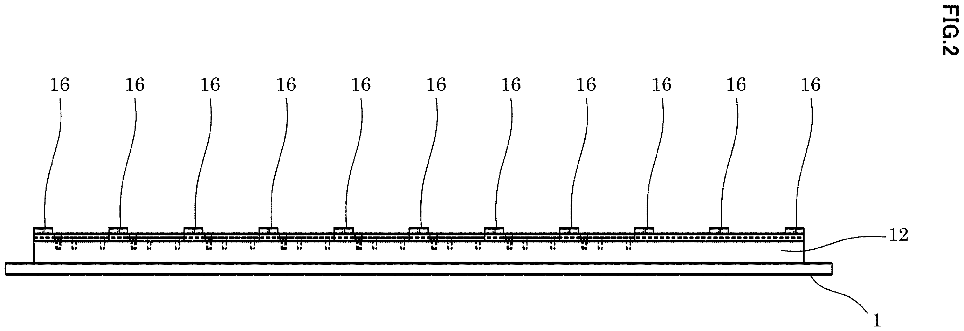

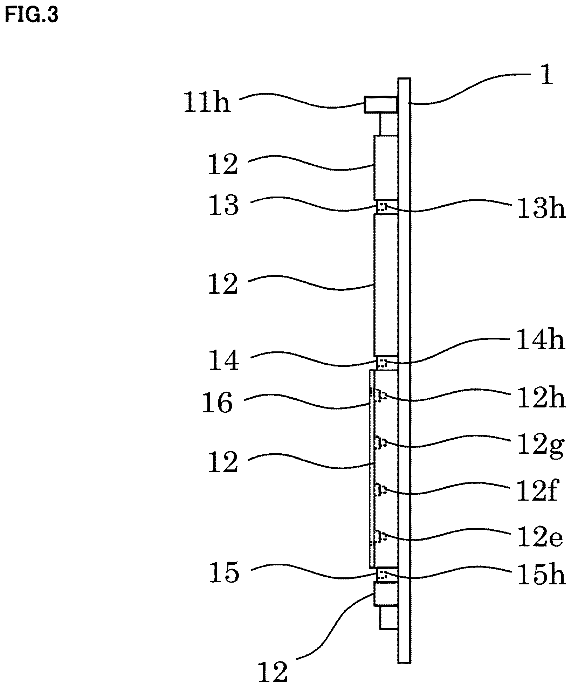

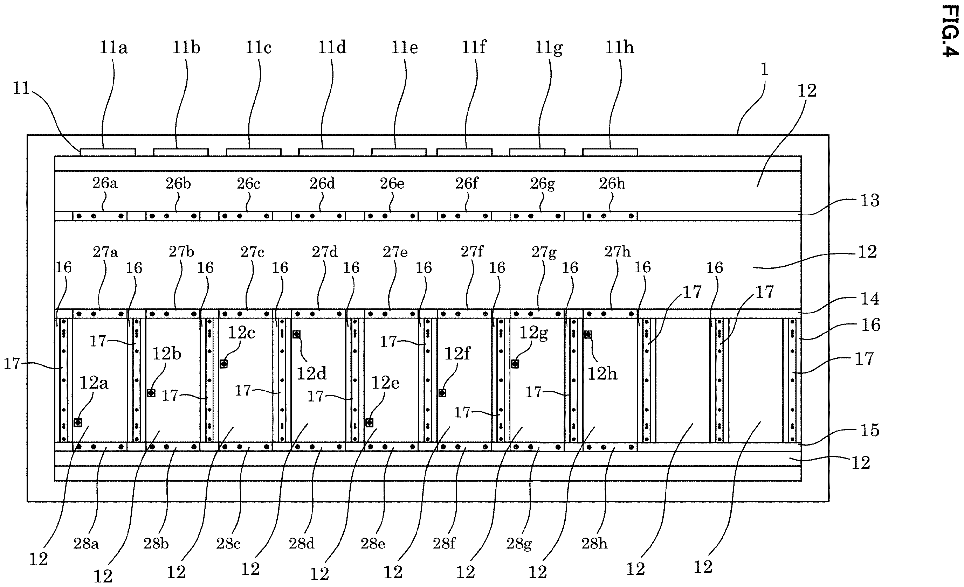

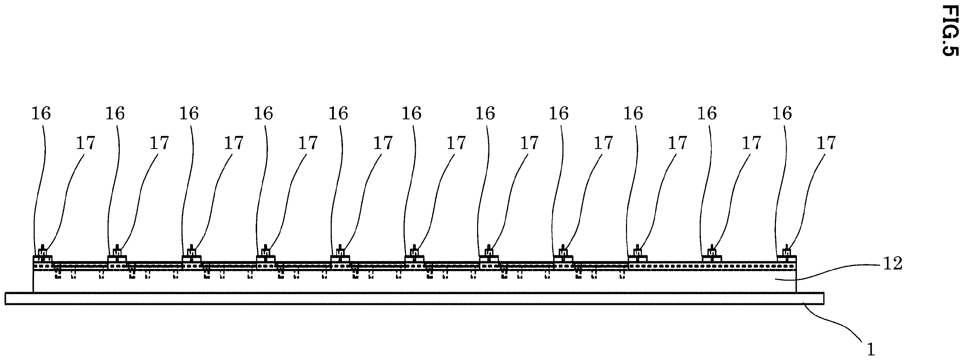

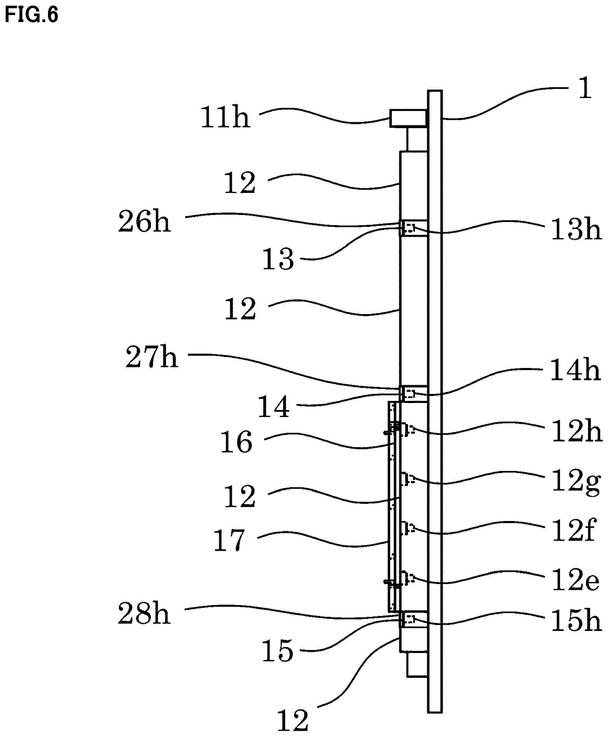

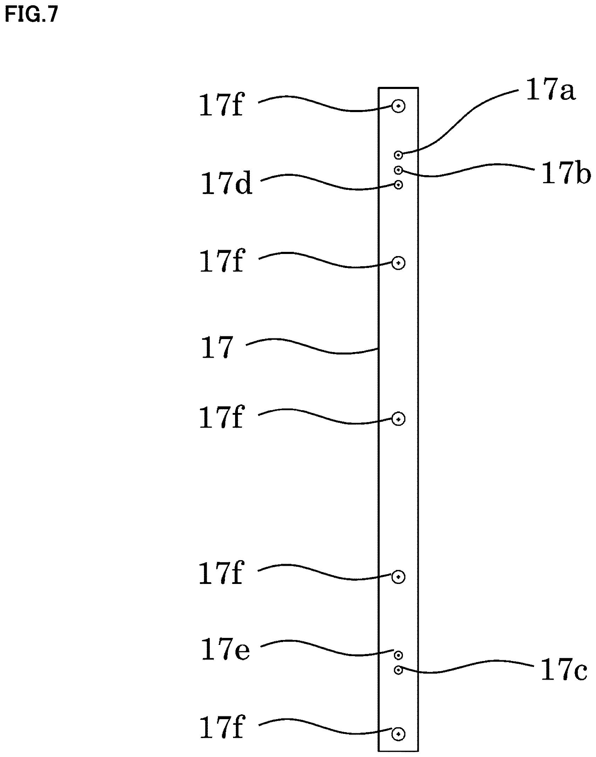

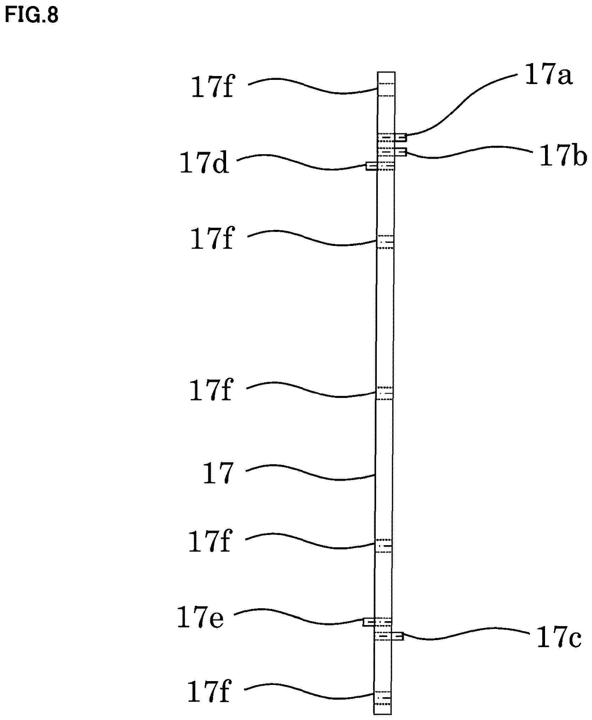

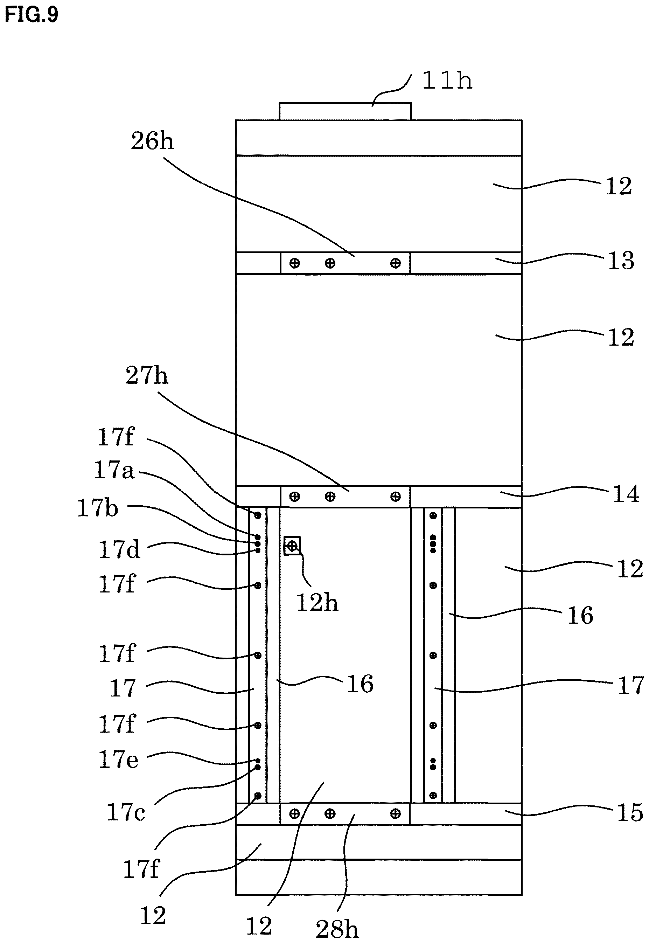

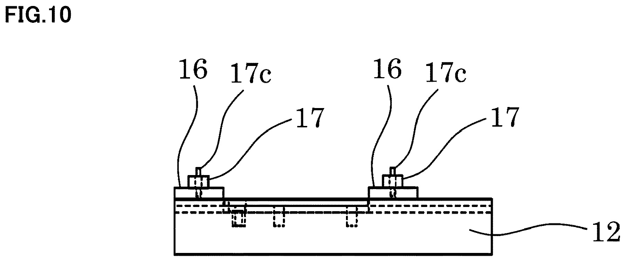

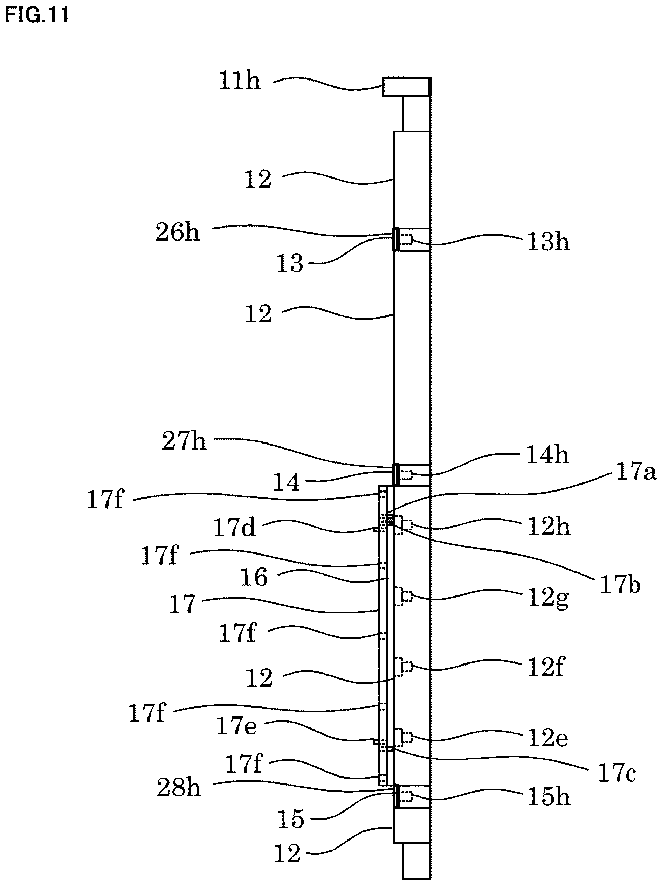

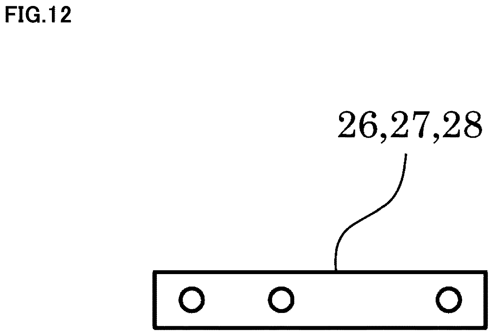

Hereinafter, Embodiment 1 of the present invention will be described based on FIG. 1 to FIG. 12. Then, in each of the drawings, identical or equivalent members and portions will be described with the same reference numerals (and letters) assigned thereto. FIG. 1 is a plan view showing a switchboard assembly facility according to Embodiment 1 of the present invention. FIG. 2 is a front view showing the switchboard assembly facility according to Embodiment 1 of the present invention. FIG. 3 is a side view showing the switchboard assembly facility according to Embodiment 1 of the present invention. FIG. 4 is a plan view showing the switchboard assembly facility according to Embodiment 1 of the present invention. FIG. 5 is a front view showing the switchboard assembly facility according to Embodiment 1 of the present invention. FIG. 6 is a side view showing the switchboard assembly facility according to Embodiment 1 of the present invention. FIG. 7 is a plan view showing a vertical busbar positioning jig in the switchboard assembly facility according to Embodiment 1 of the present invention. FIG. 8 is a side view showing the vertical busbar positioning jig in the switchboard assembly facility according to Embodiment 1 of the present invention. FIG. 9 is a plan view showing a part of the switchboard assembly facility according to Embodiment 1 of the present invention. FIG. 10 is a front view showing the part of the switchboard assembly facility according to Embodiment 1 of the present invention. FIG. 11 is a side view showing the part of the switchboard assembly facility according to Embodiment 1 of the present invention. FIG. 12 is a plan view showing a horizontal busbar nut in the switchboard assembly facility according to Embodiment 1 of the present invention.

The switchboard assembly facility will be described based on FIG. 1 to FIG. 12. Horizontal busbar reference positioning patch plates 11 which determine the reference positions of a plurality of horizontal busbars 2 are mounted in plural numbers with a predetermined interval on a surface plate 1. The drawings show an embodiment with, for example, eight horizontal busbars 2 and eight horizontal busbar reference positioning patch plates 11 referenced as 11a to 11h. The eight horizontal busbars 2 are referenced as 2a to 2h (to be described later). Furthermore, the embodiment shows four vertical busbars, each vertical busbar 3 being L-shaped. The vertical busbars 3 are referenced as 3a to 3d (to be described later).

A horizontal busbar height positioning plate 12 that determines the height positions of the horizontal busbars 2 with which 8 horizontal busbar reference positioning patch plates 11 are brought into contact is mounted on the surface plate 1. A plurality of mounting grooves 13,14,15, each of which is for attaching an internal frame of the switchboard, are provided on the horizontal busbar height positioning plate 12 in directions orthogonal to the horizontal busbars 2.

A horizontal busbar horizontal direction positioning patch plate 16 that determines the horizontal direction position of the horizontal busbar 2 is mounted on the horizontal busbar height positioning plate 12 at a position where the plurality of vertical busbars 3 extend. Each of the horizontal busbar reference positioning patch plates 11a to 11h is arranged so as to correspond to between the horizontal busbar horizontal direction positioning patch plates 16. For example, pinholes 16a,16b,16c to which, for example, engaging pins 17a,17b,17c of a vertical busbar positioning jig 17 are provided on the horizontal busbar horizontal direction positioning patch plate 16 (to be described later).

The vertical busbar positioning jig 17 which determines the positions of the vertical busbars 3 is mounted on the horizontal busbar horizontal direction positioning patch plate 16. The engaging pins 17a,17b,17c to be engaged to the pinholes 16a,16b,16c of the horizontal busbar horizontal direction positioning patch plate 16 are provided on the back side of the vertical busbar positioning jig 17; and, for example, positioning pins 17d,17e that determine the positions of the vertical busbars 3 are provided on the front side of the vertical busbar positioning jig 17.

Furthermore, the vertical busbar positioning jig 17 is provided with a plurality of relief holes 17f that take the role of relief places of tip portions of fastening bolts 35 which clamp and fix a first vertical busbar fixture 31, the vertical busbars 3, and a second vertical busbar fixture 32 of a vertical busbar clamping member 30 (to be described later). Incidentally, the first vertical busbar fixture 31 is provided with pinholes 31a, 31b which are engaged to the positioning pins 17d, 17e of the vertical busbar positioning jig 17.

As to be described later, a vertical busbar connection block 18 is provided on the horizontal busbar 2a at the position of the corresponding vertical busbar 3a; a vertical busbar connection block 19 is provided on the horizontal busbar 2b at the position of the corresponding vertical busbar 3b; a vertical busbar connection block 20 is provided on the horizontal busbar 2c at the position of the corresponding vertical busbar 3c; a vertical busbar connection block 21 is provided on the horizontal busbar 2d at the position of the corresponding vertical busbar 3d; a vertical busbar connection block 22 is provided on the horizontal busbar 2e at the position of the corresponding vertical busbar 3a; a vertical busbar connection block 23 is provided on the horizontal busbar 2f at the position of the corresponding vertical busbar 3b; a vertical busbar connection block 24 is provided on the horizontal busbar 2g at the position of the corresponding vertical busbar 3c; and a vertical busbar connection block 25 is provided on the horizontal busbar 2h at the position of the corresponding vertical busbar 3d. Then, a relief hole 12a of the horizontal busbar height positioning plate 12 is provided at a connection position between the horizontal busbar 2a and the vertical busbar 3a; a relief hole 12b of the horizontal busbar height positioning plate 12, at a connection position between the horizontal busbar 2b and the vertical busbar 3b; a relief hole 12c of the horizontal busbar height positioning plate 12, at a connection position between the horizontal busbar 2c and the vertical busbar 3c; a relief hole 12d of the horizontal busbar height positioning plate 12, at a connection position between the horizontal busbar 2d and the vertical busbar 3d; a relief hole 12e of the horizontal busbar height positioning plate 12, at a connection position between the horizontal busbar 2e and the vertical busbar 3a; a relief hole 12f of the horizontal busbar height positioning plate 12, at a connection position between the horizontal busbar 2f and the vertical busbar 3b; a relief hole 12g of the horizontal busbar height positioning plate 12, at a connection position between the horizontal busbar 2g and the vertical busbar 3c; and a relief hole 12h of the horizontal busbar height positioning plate 12, at a connection position between the horizontal busbar 2h and the vertical busbar 3d. Then, the relief holes 12a to 12h take the role of relief places of tip portions of connecting bolts 29 which connect the respective horizontal busbar 2a to 2h and the respective vertical busbars 3a to 3d (to be described later).

The mounting groove 13 is provided with relief holes 13a to 13h, which are for attaching the internal frame of the switchboard, at positions corresponding to mounting holes 2a1 to 2h1 of the respective horizontal busbars 2a to 2h. The mounting groove 14 is provided with relief holes 14a to 14h, which are for attaching the internal frame of the switchboard, at positions corresponding to mounting holes 2a2 to 2h2 of the respective horizontal busbars 2a to 2h. The mounting groove 15 is provided with relief holes 15a to 15h, which are for attaching the internal frame of the switchboard, at positions corresponding to mounting holes 2a3 to 2h3 of the respective horizontal busbars 2a to 2h.

Horizontal busbar nuts 26a to 26h, each of which serves as a horizontal busbar nut 26, are inserted at positions corresponding to the relief holes 13a to 13h of the mounting groove 13, respectively. Horizontal busbar nuts 27a to 27h, each of which serves as a horizontal busbar nut 27, are inserted at positions corresponding to the relief holes 14a to 14h of the mounting groove 14, respectively. Horizontal busbar nuts 28a to 28h, each of which serves as a horizontal busbar nut 28, are inserted at positions corresponding to the relief holes 15a to 15h of the mounting groove 15, respectively.

As described above, the assembly facility is such that the horizontal busbar reference positioning patch plates 11 and the horizontal busbar height positioning plate 12 are mounted on the surface plate 1, the horizontal busbar horizontal direction positioning patch plates 16 are mounted on the horizontal busbar height positioning plate 12, and the vertical busbar positioning jigs 17 are mounted on the horizontal busbar horizontal direction positioning patch plates 16; and therefore, positioning of the horizontal busbar 2 can be performed by only inserting the horizontal busbar 2 between the horizontal busbar horizontal direction positioning patch plates 16 and bringing the horizontal busbar 2 into contact with the horizontal busbar reference positioning patch plate 11. Then, positioning of the vertical busbars 3 to be connected to the horizontal busbars 2 can be performed by the vertical busbar positioning jigs 17.

Therefore, when the horizontal busbars 2 and the vertical busbars 3 are assembled, adjustment work for the positions of the horizontal busbars 2 and the vertical busbars 3 is wholly eliminated, much time and labor are not required as in the aforementioned conventional way, and the plurality of horizontal busbars 2 and the plurality of vertical busbars 3 can be easily assembled in a short time within assembly tolerance of drawing instructions.

Furthermore, the adjustment work for the position of the horizontal busbars 2 and the vertical busbars 3 is wholly eliminated; and therefore, whoever assembles, assembly can be performed in stable quality.

Incidentally, the aforementioned description has been made on the case where the pinholes 16a,16b,16c are provided on the horizontal busbar horizontal direction positioning patch plate 16, the engaging pins 17a,17b,17c are provided on the vertical busbar positioning jig 17, the engaging pins 17d,17e are provided on the vertical busbar positioning jig 17, and the pinholes 31a,31b are provided on the first vertical busbar fixture 31; however, even when the respective pinholes and engaging pins are reversely arranged, the same effects can be exhibited.

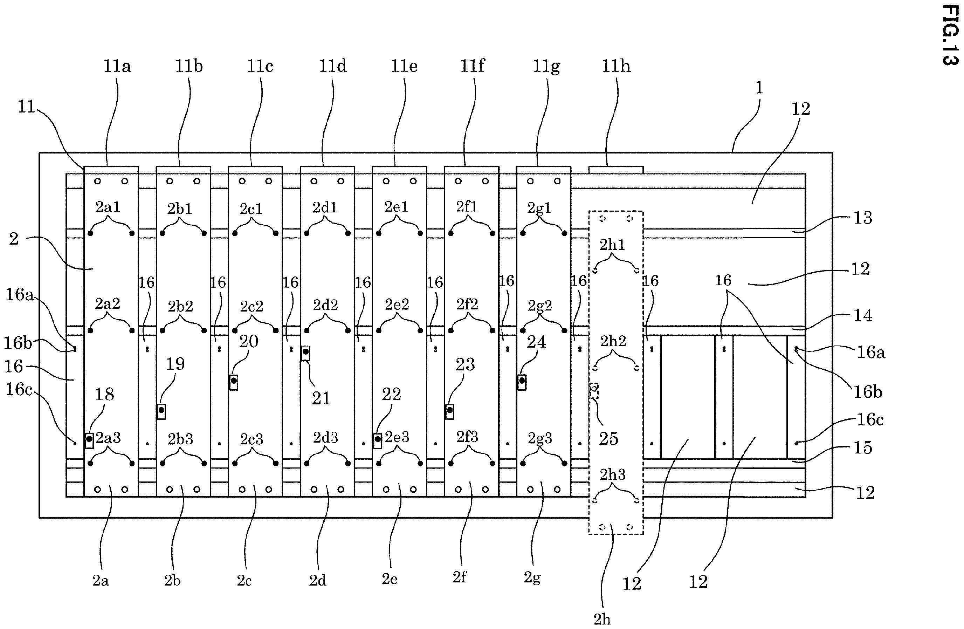

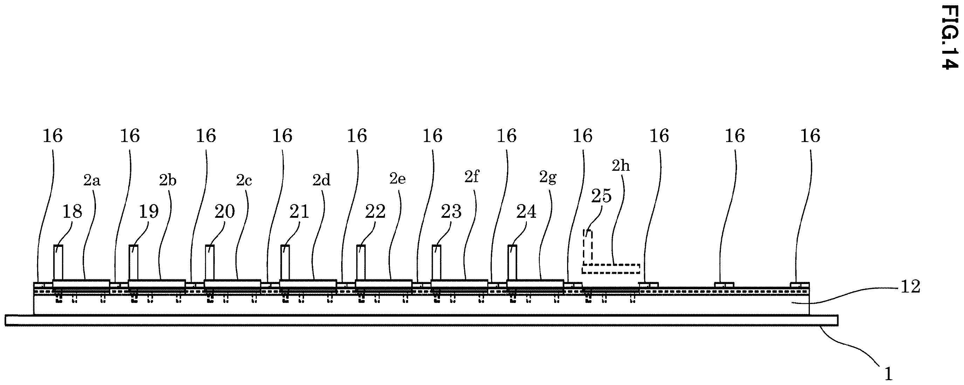

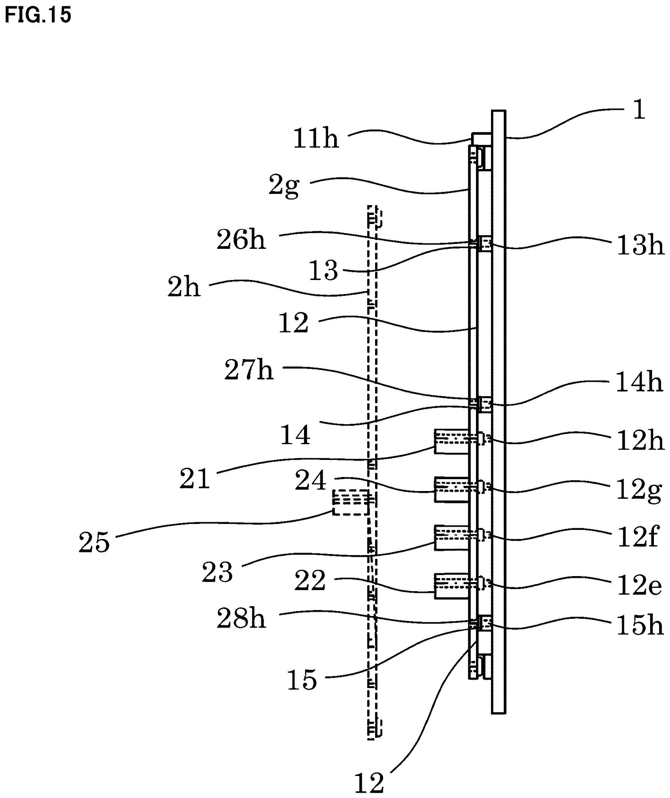

Next, a switchboard assembly method will be described based on FIG. 13 to FIG. 22. FIG. 13 is a plan view showing a switchboard assembly method according to Embodiment 1 of the present invention. FIG. 14 is a front view showing the switchboard assembly method according to Embodiment 1 of the present invention. FIG. 15 is a side view showing the switchboard assembly method according to Embodiment 1 of the present invention. For the sake of simplicity, FIG.13 to FIG. 15 show states where the vertical busbar positioning jigs are omitted.

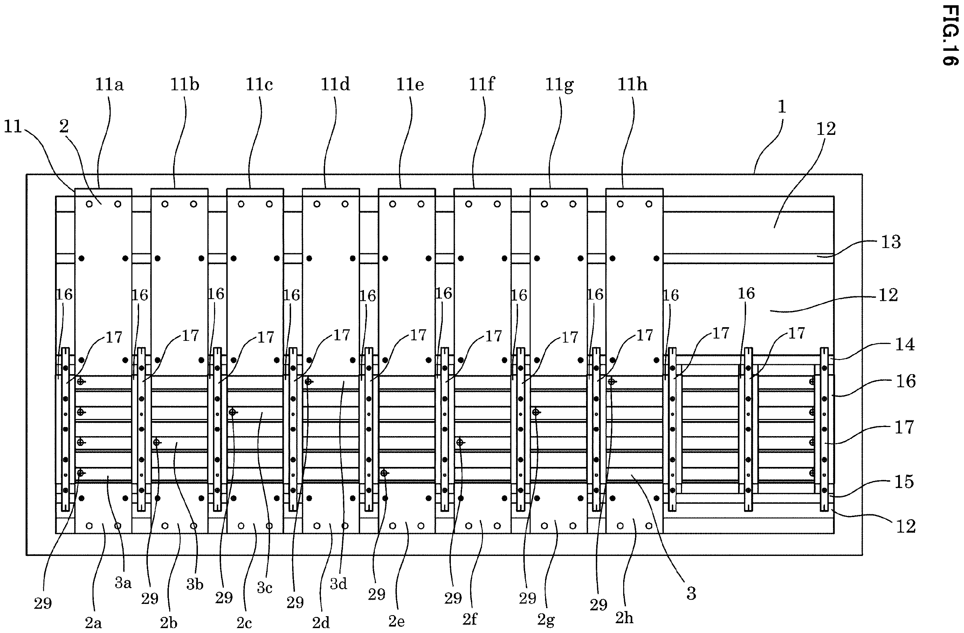

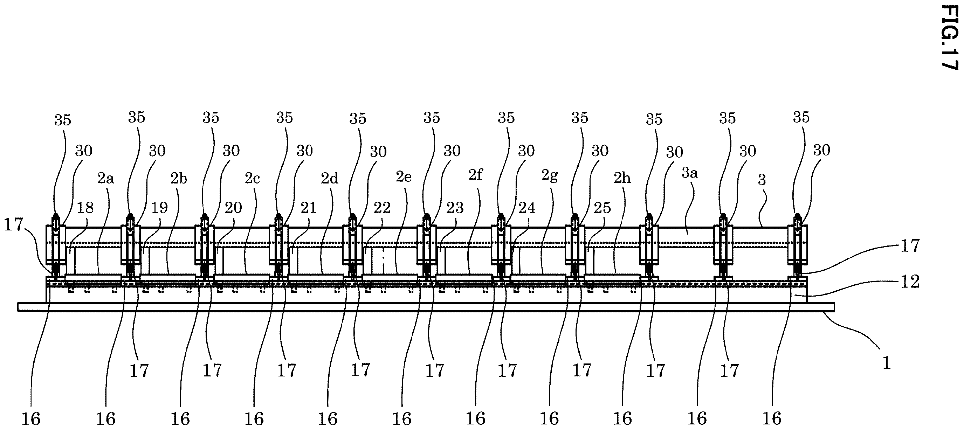

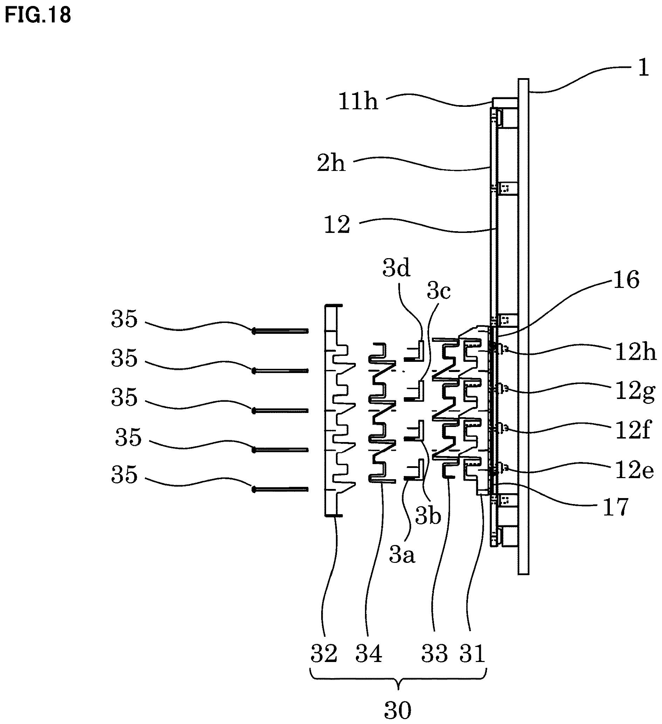

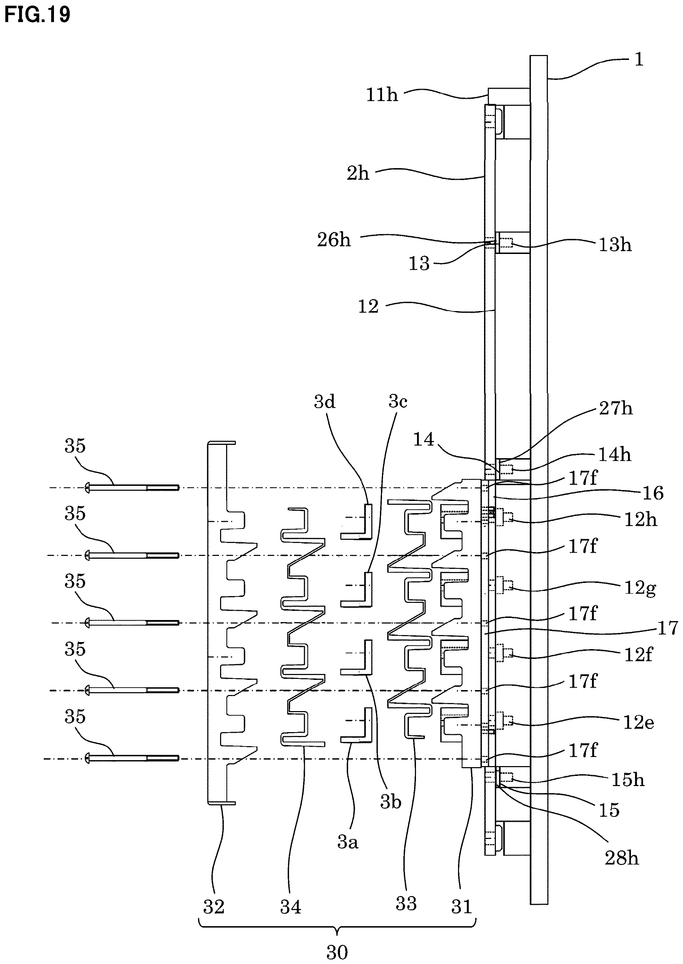

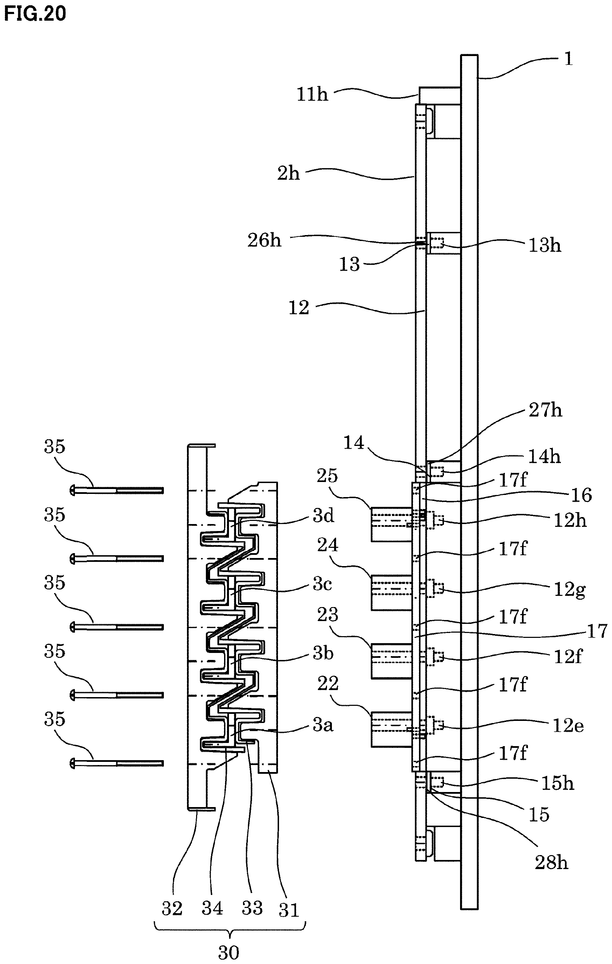

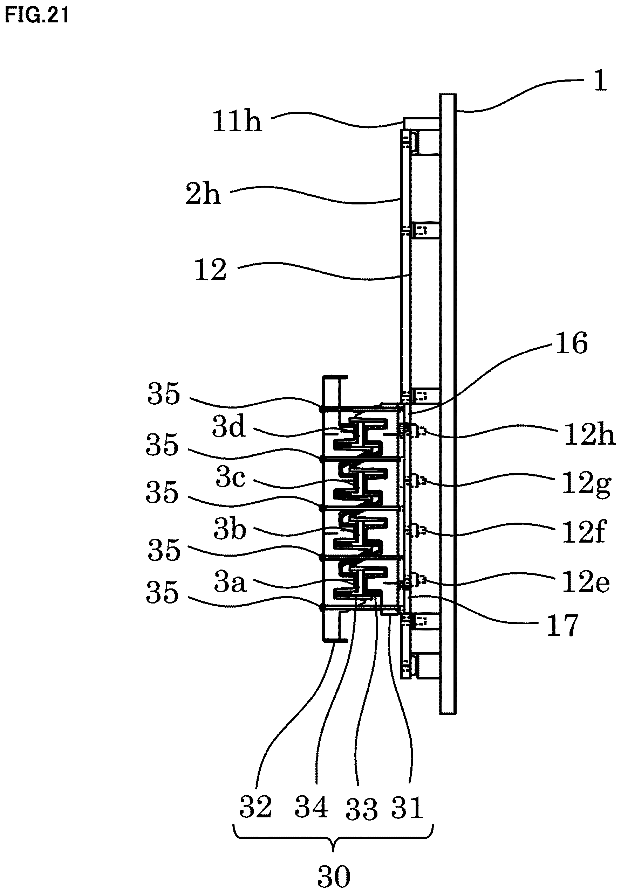

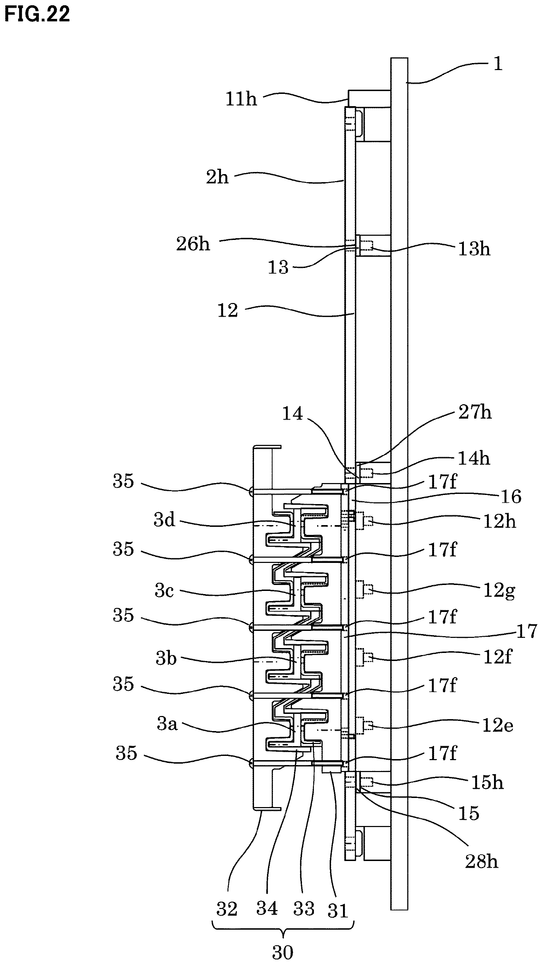

FIG. 16 is a plan view showing the switchboard assembly method according to Embodiment 1 of the present invention. FIG. 17 is a front view showing the switchboard assembly method according to Embodiment 1 of the present invention. FIG. 18 is a side view showing the switchboard assembly method according to Embodiment 1 of the present invention. FIG. 19 is an enlarged side view showing the switchboard assembly method according to Embodiment 1 of the present invention. FIG. 20 is an enlarged side view showing the switchboard assembly method according to Embodiment 1 of the present invention. FIG. 21 is a side view showing the switchboard assembly method according to Embodiment 1 of the present invention. FIG. 22 is an enlarged side view showing the switchboard assembly method according to Embodiment 1 of the present invention.

First, the horizontal busbar 2a having the vertical busbar connection block 18 at the position corresponding to the relief hole 12a of the horizontal busbar height positioning plate 12 is inserted between the horizontal busbar horizontal direction positioning patch plates 16 and a tip portion of the horizontal busbar 2a is brought into contact with the horizontal busbar reference positioning patch plate 11a; the horizontal busbar 2b having the vertical busbar connection block 19 at the position corresponding to the relief hole 12b of the horizontal busbar height positioning plate 12 is inserted between the horizontal busbar horizontal direction positioning patch plates 16 and a tip portion of the horizontal busbar 2b is brought into contact with the horizontal busbar reference positioning patch plate 11b; the horizontal busbar 2c having the vertical busbar connection block 20 at the position corresponding to the relief hole 12c of the horizontal busbar height positioning plate 12 is inserted between the horizontal busbar horizontal direction positioning patch plates 16 and a tip portion of the horizontal busbar 2c is brought into contact with the horizontal busbar reference positioning patch plate 11c; the horizontal busbar 2d having the vertical busbar connection block 21 at the position corresponding to the relief hole 12d of the horizontal busbar height positioning plate 12 is inserted between the horizontal busbar horizontal direction positioning patch plates 16 and a tip portion of the horizontal busbar 2d is brought into contact with the horizontal busbar reference positioning patch plate 11d; the horizontal busbar 2e having the vertical busbar connection block 22 at the position corresponding to the relief hole 12e of the horizontal busbar height positioning plate 12 is inserted between the horizontal busbar horizontal direction positioning patch plates 16 and a tip portion of the horizontal busbar 2e is brought into contact with the horizontal busbar reference positioning patch plate 11e; the horizontal busbar 2f having the vertical busbar connection block 23 at the position corresponding to the relief hole 12f of the horizontal busbar height positioning plate 12 is inserted between the horizontal busbar horizontal direction positioning patch plates 16 and a tip portion of the horizontal busbar 2f is brought into contact with the horizontal busbar reference positioning patch plate 11f; the horizontal busbar 2g having the vertical busbar connection block 24 at the position corresponding to the relief hole 12g of the horizontal busbar height positioning plate 12 is inserted between the horizontal busbar horizontal direction positioning patch plates 16 and a tip portion of the horizontal busbar 2g is brought into contact with the horizontal busbar reference positioning patch plate 11g; and the horizontal busbar 2h having the vertical busbar connection block 25 at the position corresponding to the relief hole 12h of the horizontal busbar height positioning plate 12 is inserted between the horizontal busbar horizontal direction positioning patch plates 16 and a tip portion of the horizontal busbar 2h is brought into contact with the horizontal busbar reference positioning patch plate 11h. This can perform positioning of the horizontal busbars 2a to 2h.

In the second place, the vertical busbar 3a is arranged at the position of the vertical busbar connection block 18 of the horizontal busbar 2a and at the position of the vertical busbar connection block 22 of the horizontal busbar 2e; the vertical busbar 3b, at the position of the vertical busbar connection block 19 of the horizontal busbar 2b and at the position of the vertical busbar connection block 23 of the horizontal busbar 2f; the vertical busbar 3c, at the position of the vertical busbar connection block 20 of the horizontal busbar 2c and at the position of the vertical busbar connection block 24 of the horizontal busbar 2g; and the vertical busbar 3d, at the position of the vertical busbar connection block 21 of the horizontal busbars 2d and at the position of the vertical busbar connection block 25 of the horizontal busbar 2h.

Then, as shown in FIG. 19 and FIG. 20, the L-shaped vertical busbars 3a to 3d are integrally sandwiched by the first vertical busbar fixture 31 and the second vertical busbar fixture 32 of the vertical busbar clamping member 30 to perform mutual positioning therebetween. A first vertical busbar insulation member 33 is attached by insertion between the first vertical busbar fixture 31 and the vertical busbars 3a to 3d; and a second vertical busbar insulation member 34, between the second vertical busbar fixture 32 and the vertical busbar 3a to 3d.

Incidentally, as shown in FIG. 19, the shapes of the first vertical busbar fixture 31, the second vertical busbar fixture 32, the first vertical busbar insulation member 33, and the second vertical busbar insulation member 34 are formed in shapes which determine and retain a mutual position between the L-shaped vertical busbars 3a to 3d.

As described above, the vertical busbars 3a to 3d are integrally fastened by means of the fastening bolts 35 while sandwiching the first vertical busbar insulation member 33 between the first vertical busbar fixture 31 and the vertical busbars 3a to 3d and sandwiching the second vertical busbar insulation member 34 between the second vertical busbar fixture 32 and the vertical busbars 3a to 3d, whereby mutual positioning between the vertical busbars 3a to 3d can be performed.

Positioning with respect to the horizontal busbars 2a to 2h can be performed by engaging the pinholes 31a,31b of the first vertical busbar fixture 31, which is a structure integrally fastened by the fastening bolts 35, to the positioning pins 17d,17e of the vertical busbar positioning jig 17.

Furthermore, as for other positioning method of the vertical busbars 3a to 3d, positioning with respect to the horizontal busbars 2a to 2h is performed by engaging the pinholes 31a,31b of the first vertical busbar fixture 31 to the positioning pins 17d,17e of the vertical busbar positioning jig 17; the first vertical busbar insulation member 33 is attached to that first vertical busbar fixture 31; and the vertical busbars 3a to 3d are arranged on the first vertical busbar insulation member 33, whereby the vertical busbars 3a to 3d are arranged at the positions of the vertical busbar connection blocks 18 to 25 of the horizontal busbars 2a to 2h.

Then, the second vertical busbar insulation member 34 is attached to the vertical busbars 3a to 3d to perform insulation together with the first vertical busbar insulation member 33, the second vertical busbar fixture 32 is attached to the second vertical busbar insulation member 34, and the second vertical busbar fixture 32 is fastened to the first vertical busbar fixture 31 by the fastening bolts 35, whereby mutual positioning between the vertical busbars 3a to 3d and positioning with respect to the horizontal busbars 2a to 2h are performed. Incidentally, the tip portion of the fastening bolt 35 passes through the relief hole 17f of the vertical busbar positioning jig 17 and is separated from the vertical busbar positioning jig 17.

In this manner, after the positioning of the horizontal busbars 2a to 2h and the positioning of the horizontal busbars 2a to 2h and the vertical busbars 3a to 3d are performed, the vertical busbar connection blocks 18 to 25 of the horizontal busbars 2a to 2h and the vertical busbars 3a to 3d are connected by the connecting bolts 29, whereby assembly of the horizontal busbars 2a to 2h and the vertical busbars 3a to 3d is completed.

As described above, the assembly method is such that the horizontal busbars 2a to 2h are each inserted between the horizontal busbar horizontal direction positioning patch plates 16 of the horizontal busbar height positioning plate 12 mounted on the surface plate 1, each of the tip portions of the horizontal busbars 2a to 2h is brought into contact with each of the horizontal busbar reference positioning patch plates 11a to 11h mounted on the surface plate 1, the positioning of each of the horizontal busbars 2a to 2h is performed, the vertical busbars 3a to 3d are sandwiched between the first vertical busbar fixture 31 and the second vertical busbar fixture 32 and are integrally fastened and mounted on the vertical busbar positioning jig 17 provided on the horizontal busbar horizontal direction positioning patch plate 16 by the fastening bolts 35, and the positioning of the vertical busbars 3a to 3d and the horizontal busbars 2a to 2h is performed; and therefore, the positioning of each of the horizontal busbars 2a to 2h can be performed by only inserting each of the horizontal busbars 2a to 2h between the horizontal busbar horizontal direction positioning patch plates 16 and bringing each of the horizontal busbars 2a to 2h into contact with each of the horizontal busbar reference positioning patch plates 11a to 11h. Then, the positioning of the vertical busbars 3a to 3d to be connected to the horizontal busbars 2a to 2h can be performed by the vertical busbar positioning jigs 17.

Therefore, in the assembly method such as this, when the horizontal busbars 2a to 2h and the vertical busbars 3 are assembled, the adjustment work for the positions of the horizontal busbars 2a to 2h and the vertical busbars 3a to 3d is wholly eliminated, much time and labor are not required as in the aforementioned conventional way, and the plurality of horizontal busbars 2a to 2h and the plurality of vertical busbars 3a to 3d can be easily assembled in a short time within the assembly tolerance of the drawing instructions.

Furthermore, in the assembly method such as this, the adjustment work for the positions of the horizontal busbars 2a to 2h and the vertical busbars 3a to 3d is wholly eliminated; and therefore, whoever assembles, the assembly can be performed in stable quality.

Incidentally, there has been described the case where the vertical busbars 3a to 3d are each L-shaped; however, the present invention is not limited to this; and, for example, in the case of a flat plate shape, the shapes of the first vertical busbar fixture 31, the second vertical busbar fixture 32, the first vertical busbar insulation member 33, and the second vertical busbar insulation member 34 can be simplified.

Incidentally, the present invention can freely combine the respective embodiments and appropriately modify and/or omit the respective embodiments, within the scope of the present invention, as defined in the appended claims.

### INDUSTRIAL APPLICABILITY

The present invention is suitable for actualizing a switchboard assembly facility and a switchboard assembly method, in which assembly can be performed by simple work and in stable quality.

### DESCRIPTION OF REFERENCE NUMERALS

1 Surface plate, 2 Horizontal busbar, 2a Horizontal busbar, 2b Horizontal busbar, 2c Horizontal busbar, 2d Horizontal busbar, 2e Horizontal busbar, 2f Horizontal busbar, 2g Horizontal busbar, 2h Horizontal busbar, 3 Vertical busbar, 3a Vertical busbar, 3b Vertical busbar, 3c Vertical busbar, 3d Vertical busbar, 3e Vertical busbar, 3f Vertical busbar, 3g Vertical busbar, 3h Vertical busbar, 11 Horizontal busbar reference positioning patch plate, 11a Horizontal busbar reference positioning patch plate, 11b Horizontal busbar reference positioning patch plate, 11c Horizontal busbar reference positioning patch plate, 11d Horizontal busbar reference positioning patch plate, 11e Horizontal busbar reference positioning patch plate, 11f Horizontal busbar reference positioning patch plate, 11g Horizontal busbar reference positioning patch plate, 11h Horizontal busbar reference positioning patch plate, 12 Horizontal busbar height positioning plate, 16 Horizontal busbar horizontal direction positioning patch plate, 16a Pinhole, 16b Pinhole, 16c Pinhole, 17 Vertical busbar positioning jig, 17a Engaging pin, 17b Engaging pin, 17c Engaging pin, 17d Positioning pin, 17e Positioning pin, 29 Connecting bolt, 30 Vertical busbar positioning clamping member, 31 First vertical busbar fixture, 32 Second vertical busbar fixture, 33 First vertical busbar insulation member, 34 Second vertical busbar insulation member, and 35 Fastening bolt.

## Claims

1. A switchboard assembly facility comprising:
a plurality of horizontal busbar reference positioning patch plates (11) which are mounted on a surface plate (1), each determining the reference position of each of a plurality of horizontal busbars (2) by bringing a tip portion of each of the horizontal busbars (2) into contact with a corresponding horizontal busbar reference positioning patch plate (11);
a horizontal busbar height positioning plate (12) which is mounted on said surface plate (1) and determines the height position of said horizontal busbars (2) over said surface plate (1); and
a plurality of horizontal busbar horizontal direction positioning patch plates (16) which are mounted on said horizontal busbar height positioning plate (12) at a position where a plurality of vertical busbars (3) extend and determine the horizontal direction position of said horizontal busbars (2), each of the plurality of horizontal busbars (2) inserted between corresponding horizontal busbar horizontal direction positioning patch plates (16).

2. The switchboard assembly facility according to claim 1,
further comprising a vertical busbar positioning jig (17) which is mounted on said horizontal busbar horizontal direction positioning patch plates (16) and determines the position of said vertical busbars (3)_{.}

3. The switchboard assembly facility according to claim 2,
wherein each said horizontal busbar horizontal direction positioning patch plate (16) is formed with a plurality of pinholes (16a, 16b, 16c);
the back side of said vertical busbar positioning jig (17) is provided with engaging pins (17a, 17b, 17c) to be engaged to the pinholes (16a, 16b, 16c) of said horizontal busbar horizontal direction positioning patch plate (16); and
the front side of said vertical busbar positioning jig (17) is provided with positioning pins (17d, 17e) that determine the positions of said vertical busbars (3).

4. The switchboard assembly facility according to any one of claim 1 to claim 3,
wherein each said vertical busbar (3) is L-shaped.

5. A switchboard assembly method for a switchboard assembly facility according to any preceding claim, the method comprising the steps of:
inserting each of a plurality of horizontal busbars (2), each having a connection block (18∼25) to be connected to each of a plurality of vertical busbars (3), between horizontal busbar horizontal direction positioning patch plates (16) of a horizontal busbar height positioning plate (12) mounted on a surface plate (1) and bringing each of the plurality of horizontal busbars (2) into contact with each of horizontal busbar reference positioning patch plates (11); and
arranging each of the plurality of said vertical busbars (3), each of which extends orthogonal to each of said horizontal busbars (2), at the position of each of said connection blocks (18∼25) of said horizontal busbars (2).

6. The switchboard assembly method according to claim 5,
further comprising the steps of:
attaching a first vertical busbar fixture (31) that performs positioning of said vertical busbars (3) to a vertical busbar positioning jig (17) mounted on said horizontal busbar horizontal direction positioning patch plate (16), engaging said vertical busbars (3) to said first vertical busbar fixture (31) to determine the positions thereof, attaching a second vertical busbar fixture (32) so as to sandwich said vertical busbars (3), and fixing said vertical busbars (3) by said first vertical busbar fixture (31) and said second vertical busbar fixture (32); and
connecting said connection block (18∼25) of said horizontal busbar (2) and said vertical busbars (3).

7. The switchboard assembly method according to claim 6,
further comprising the step of arranging an insulation member between said vertical busbars (3) and said first vertical busbar fixture (31) and between said vertical busbars (3) and said second vertical busbar fixture (32).

## Patentansprüche

1. Schaltschrank-Montagevorrichtung, aufweisend:
eine Vielzahl von auf einer Oberflächenplatte (1) montierten Patchplatten (11) zur Sollpositionierung von horizontalen Sammelschienen, wobei jede Patchplatte die Sollposition einer jeder der Vielzahl von horizontalen Sammelschienen (2) festlegt, indem ein Spitzenabschnitt jeder der horizontalen Sammelschienen (2) in Kontakt mit einer entsprechenden Patchplatte (11) zur Sollpositionierung von horizontalen Sammelschienen gebracht wird;
eine Patchplatte (12) zur Höhenpositionierung von horizontalen Sammelschienen, die auf der Oberflächenplatte (1) montiert ist und die Höhenposition der horizontalen Sammelschienen (2) über der Platte (1) festlegt; und
eine Vielzahl von Patchplatten (16) zur Positionierung von horizontalen Sammelschienen in horizontaler Richtung, die auf der Patchplatte (12) zur Höhenpositionierung von horizontalen Sammelschienen an einer Stelle montiert sind, wo sich eine Vielzahl vertikaler Sammelschienen (3) erstreckt, und die Position in horizontaler Richtung der horizontalen Sammelschienen (2) festlegt,
wobei jede der Vielzahl von horizontalen Sammelschienen (2) zwischen die entsprechenden Patchplatten (16) zur Positionierung von horizontalen Sammelschienen in horizontaler Richtung eingesteckt wird.

2. Schaltschrank-Montagevorrichtung nach Anspruch 1,
ferner aufweisend eine Positionierlehre (17) für vertikale Sammelschienen, die an der Patchplatte (16) zur Positionierung von horizontalen Sammelschienen in horizontaler Richtung montiert ist und die Position der vertikalen Sammelschienen (3) festlegt.

3. Schaltschrank-Montagevorrichtung nach Anspruch 2,
wobei jede Patchplatte (16) zur Positionierung von horizontalen Sammelschienen in horizontaler Richtung mit einer Vielzahl von Stiftlöchern (16a, 16b, 16c) ausgebildet ist;
die Rückseite der Positionierlehre (17) für vertikale Sammelschienen mit eingreifenden Stiften (17a, 17b, 17c) versehen ist, damit diese in die Stiftlöcher (16a, 16b, 16c) der Patchplatte (16) zur Positionierung von horizontalen Sammelschienen in horizontaler Richtung eingreifen; und
die Vorderseite der Positionierlehre (17) für vertikale Sammelschienen mit Positionierstiften (17d, 17e) versehen ist, die die Positionen der vertikalen Sammelschienen (3) festlegen.

4. Schaltschrank-Montagevorrichtung nach einem der Ansprüche 1 bis 3, wobei jede vertikale Sammelschiene (3) L-förmig ist.

5. Schaltschrank-Montageverfahren für eine Schaltschrank-Montagevorrichtung nach einem der vorstehenden Ansprüche, wobei das Verfahren die folgenden Schritte aufweist:
Einführen jeder einer Vielzahl von horizontalen Sammelschienen (2), wobei jede einen Verbindungsblock (18∼25) aufweist, der mit jeder einer Vielzahl von vertikalen Sammelschienen (3) zwischen Patchplatten (16) zur Positionierung von horizontalen Sammelschienen in horizontaler Richtung einer auf einer Oberflächenplatte (1) montierten Platte (12) zur Höhenpositionierung von horizontalen Sammelschienen verbunden wird, und in Kontakt bringen von jeder der Vielzahl horizontaler Sammelschienen (2) mit jeder der Patchplatten (11) zur Sollpositionierung von horizontalen Sammelschienen; und
Anordnen jeder der Vielzahl von vertikalen Sammelschienen (3), wobei sich jede orthogonal zu jeder der horizontalen Sammelschienen (2) an der Position der Verbindungsblocks (18∼25) der horizontalen Sammelschienen (2) erstreckt.

6. Schaltschrank-Montageverfahren nach Anspruch 5, ferner aufweisend die folgenden Schritte:
Anbringen einer ersten vertikalen Sammelschienenhalterung (31), die die Positionierung der vertikalen Sammelschienen (3) an einer Positionierlehre (17) für vertikale Sammelschienen, die auf der Patchplatte (16) zur Positionierung von horizontalen Sammelschienen in horizontaler Richtung montiert ist, durchführt, Eingreifen der vertikalen Sammelschienen (3) in die erste vertikale Sammelschienenhalterung (31), um deren Positionen festzulegen, Anbringen einer zweiten vertikalen Sammelschienenhalterung (32), sodass die vertikalen Sammelschienen (3) eingeklemmt werden, und Befestigen der vertikalen Sammelschienen (3) durch die erste vertikale Sammelschienenhalterung (31) und die zweite vertikale Sammelschienenhalterung (32); und
Verbinden des Verbindungsblocks (18∼25) der horizontalen Sammelschiene (2) mit den vertikalen Sammelschienen (3).

7. Schaltschrank-Montageverfahren nach Anspruch 6,
ferner aufweisend den Schritt der Anordnung eines Isolierelements zwischen den vertikalen Sammelschienen (3) und der ersten vertikalen Sammelschienenhalterung (31) und zwischen den vertikalen Sammelschienen (3) und der zweiten vertikalen Sammelschienenhalterung (32).

## Revendications

1. Installation d'assemblage de tableaux de distribution, comprenant :
une pluralité de plaques de raccordement de positionnement de référence de barre omnibus horizontale (11) qui est montée sur une plaque de surface (1), chacune déterminant la position de référence de chacune d'une pluralité de barres omnibus horizontale (2) en amenant une partie de pointe de chacune des barres omnibus horizontales (2) en contact avec une plaque de raccordement de positionnement de référence de barre omnibus horizontale (11) correspondante ;
une plaque de positionnement de hauteur de barre omnibus horizontale (12) qui est montée sur ladite plaque de surface (1) et détermine la position en hauteur desdites barres omnibus horizontales (2) sur ladite plaque de surface (1) ; et
une pluralité de plaques de raccordement de positionnement en direction horizontale de barre omnibus horizontale (16) qui est montée sur ladite plaque de positionnement de hauteur de barre omnibus horizontale (12) à une position dans laquelle une pluralité de barres omnibus verticales (3) extend et determine la position de direction horizontale desdites barres omnibus horizontales (2),
chacune de la pluralité de barres omnibus horizontales (2) insérée entre les plaques de raccordement de positionnement en direction horizontale de barre omnibus horizontale (16) correspondantes.

2. Installation d'assemblage de tableaux de distribution selon la revendication 1,
comprenant en outre un gabarit de positionnement de barre omnibus verticale (17) qui est monté sur ladite plaque de raccordement horizontale de positionnement de barre omnibus en direction horizontale plates (16) et détermine la position desdites barres omnibus verticales (3).

3. Installation d'assemblage de tableaux de distribution selon la revendication 2,
dans laquelle ladite plaque de raccordement de positionnement en direction horizontale de barre omnibus horizontale (16) est formée avec une pluralité de trous d'épingle (16a, 16b, 16c) ;
le côté arrière dudit gabarit de positionnement de barre omnibus verticale (17) est muni de broche de prise (17a, 17b, 17c) pour pénétrer les trous d'épingle (16a, 16b, 16c) de ladite plaque de raccordement de positionnement en direction horizontale de barre omnibus horizontale (16) ; et
le côté avant dudit gabarit de positionnement de barre omnibus verticale (17) est muni de broches de positionnement (17d, 17e) qui déterminent les positions desdites barres omnibus verticales (3).

4. Installation d'assemblage de tableaux de distribution selon l'une quelconque de la revendication 1 à la revendication 3, dans laquelle chacune desdites barres omnibus verticales (3) est en forme de L.

5. Procédé d'assemblage de tableaux de distribution pour une installation d'assemblage de tableaux de distribution selon l'une quelconque des revendications précédentes, le procédé comprenant les étapes :
d'insertion de chacune d'une pluralité de barres omnibus horizontale (2), chacune ayant un bloc de connexion (18 ∼ 25) à connecter à chacune d'une pluralité de barres omnibus verticale (3), entre les plaques de raccordement de positionnement en direction horizontale de barre omnibus horizontale (16) d'une plaque de positionnement de hauteur de barre omnibus horizontale (12) montée sur une plaque de surface (1) et amenant chacune de la pluralité de barres omnibus horizontale (2) en contact avec chacune des plaques de raccordement de positionnement de référence de barre omnibus horizontale (11) ; et
d'agencement de chacune de la pluralité desdites barres omnibus verticale (3), dont chacun s'étend orthogonalement par rapport chacune desdites barres omnibus horizontales (2), à la position de chacun desdits blocs de connexion (18 ∼ 25) desdites barres omnibus horizontales (2).

6. Procédé d'assemblage de tableaux de distribution selon la revendication 5, comprenant en outre les étapes suivantes :
fixer un premier dispositif de barre omnibus verticale (31) qui effectue le positionnement de ladite barre omnibus verticale (3) sur un gabarit de positionnement de barre omnibus verticale (17) monté sur ladite plaque de raccordement de positionnement en direction horizontale de barre omnibus horizontale (16), mettre en prise lesdites barres omnibus verticales (3) avec ledit premier dispositif de barre omnibus verticale (31) pour déterminer leurs positions, fixer un second dispositif de barre omnibus verticale (32) de manière à prendre en sandwich lesdites barres omnibus verticales (3) et fixer lesdites barres omnibus verticales (3) par ledit premier dispositif de barre omnibus verticale (31) et ledit second dispositif de barre omnibus verticale (32) ; et
connecter ledit bloc de connexion (18 ∼ 25) de ladite barre omnibus horizontale (2) et desdites barres omnibus verticales (3).

7. Installation d'assemblage de tableaux de distribution selon la revendication 6,
comprenant en outre l'étape d'agencement d'un élément isolant entre lesdites barres omnibus verticales (3) et ledit premier dispositif de barre omnibus verticale (31) et entre lesdites barres omnibus verticales (3) et ledit second dispositif de barre omnibus verticale (32).
